# EUROPÄISCHE PATENTANMELDUNG

(11) **EP 1 117 243 A2**
(43) Veröffentlichungstag der Anmeldung: **18.07.2001**
(21) Anmeldenummer: 00440331.7
(22) Anmeldetag: 15.12.2000
(51) Int. Cl.: H04M 7/00, H04Q 3/00

(54) **Verbindungsaufbau eines PC-zu-Telefon Gesprächs in einem intelligenten Telefonnetzwerk**

(30) Priorität: 13.01.2000 DE 10001077
(71) Anmelder: ALCATEL, 75008 Paris (FR)
(72) Erfinder: Shen, Yuzhong, 70499 Stuttgart (DE)
(74) Vertreter: Brose, Gerhard

(57) **Zusammenfassung**

Die Erfindung betrifft ein Verfahren zum Aufbau einer Ruf-Verbindung zwischen einem Telefonnetz-Endgerät (TELA) und einem Internet-Endgerät (TERB) über ein als Intelligentes Netzwerk ausgebildetes Telefonnetzwerk (PSTN) und dem Internet (INT) sowie eine Dienst-Vermittlungsstelle (SSP), einen Dienst-Steuerknoten (SCP), ein Internet-Gateway (GW1), ein Programm-Modul und ein Internet-Endgerät (TERB) hierfür. Dabei empfängt das Telefonnetzwerk von dem Telefonnetz-Endgerät eine Rufanforderung an eine dem Internet-Endgerät zugeordnete Teilnehmernummer, leitet die Rufanforderung zu einer Dienst-Vermittlungsstelle (SSP), die dann in einer Dienstanforderungsnachricht an einen Dienst-Steuerknoten (SCP) einen Dienst zur Behandlung der Rufanforderung an die dem Internet-Endgerät zugeordnete Teilnehmernummer anfordert. Der Dienst-Steuerknoten ermittelt eine der Teilnehmernummer zugeordnete Internet-Adresse des Internet-Endgeräts und übermittelt diese der Dienst-Vermittlungsstelle in einer Dienstnachricht. Die Dienst-Vermittlungsstelle baut über das Telefonnetzwerk eine Ruf-Verbindung zu einem Internet-Gateway auf, sendet diesem die Internet-Adresse des Internet-Endgeräts, worauf das Internet-Gateway den Verbindungsabschnitt (VB1) der Ruf-Verbindung zwischen dem Telefonnetz-Endgerät und dem Internet-Endgerät über das Internet mit Hilfe der Internet-Adresse des Internet-Endgeräts aufbaut.

## Beschreibung

Die vorliegende Erfindung betrifft ein Verfahren gemäß dem Oberbegriff des Anspruchs 1, sowie eine Dienst-Vermittlungsstelle gemäß dem Oberbegriff des Anspruchs 7 hierfür, einen Dienst-Steuerknoten gemäß dem Oberbegriff des Anspruchs 8 hierfür, ein Internet-Gateway gemäß dem Oberbegriff des Anspruchs 9 hierfür, ein Programm-Modul gemäß dem Oberbegriff des Anspruchs 10 hierfür sowie ein Internet-Endgerät gemäß dem Oberbegriff des Anspruchs 11 hierfür.

In zunehmendem Maße werden für Telefon-Anrufe nicht nur "klassische", auch als PSTN (Public Switched Telephone Network) bezeichnete öffentliche Telefonnetzwerke eingesetzt, die exklusiv pro Ruf-Verbindung eine Leitung schalten, sondern auch paketorientierte Datennetzwerke, insbesondere das Internet. Diese Form der Telefonie wird auch als "Voice over InternetProtocol" (VolP) bezeichnet und ist beispielsweise in der Norm H.323 der ITU (International Telecommunication Union) standardisiert. Mit der H.323-Norm vergleichbare Standards oder sogenannte "Recommendations" für "Internet-Telefonie" werden auch von der IETF (Internet Engineering Task Force) verfolgt. Dabei sind Anrufe zwischen an das Internet angeschlossenen Internet-Endgeräten, üblicherweise Personal Computern, ohne weiteres möglich, indem an dem "anrufenden" Internet-Endgerät die Internet-Adresse des angerufenen Internet-Endgeräts eingegeben wird und somit durch das Internet ein (logische) Verbindung zwischen den beiden Internet-Endgeräten aufgebaut wird.

Für Sprachverbindungen oder auch für Multimedia-Verbindungen zwischen dem Internet und einem Telefonnetzwerk bildet ein sogenanntes Gateway, auch als VolP-Gateway bezeichnet, eine Brückenfunktion. Dann kann z.B. von einem an das Telefonnetzwerk angeschlossenen Telefon eine Verbindung zu einem Internet-Endgerät aufgebaut werden. Dazu wird zunächst eine Verbindung über das Telefonnetzwerk von dem Telefon zu dem VolP-Gateway aufgebaut. Dann wird von dem Telefon aus die Internet-Adresse eines gewünschten Internet-Telefons an das VolP-Gateway gesendet, worauf dieses die gewünschte Verbindung zu dem Internet-Endgerät über das Internet aufbaut. Ein Teilnehmer, der das Telefon benutzt, muss dabei einerseits die Rufnummer des VolP-Gateways und andrerseits die Internet-Adresse des Internet-Endgeräts angeben. Dies ist sehr umständlich und unkomfortabel, schon allein deshalb, weil Internet-Adressen für nicht ständig angeschlossene Internet-Endgeräte dynamisch vergeben werden und damit nur kurzzeitig gültig sind. Weiter können für die Verbindung zwischen dem Telefon und dem von dem Teilnehmer gewählten VolP-Gateway unter Umständen hohe Gebühren anfallen, die bei Anwahl eines altemativen VolP-Gateways geringer ausfallen würden. Das Telefonnetzwerk kann durch die gewählte Verbindung zu dem VolP-Gateway auch wesentlich mehr belastet werden, als durch eine Anwahl eines alternativen VolP-Gateways.

Es ist daher Aufgabe der Erfindung, auf eine für einen Bediener eines an ein Telefonnetzwerk angeschlossenen Telefonnetz-Endgerätes einfache und komfortable Weise eine Verbindung zwischen dem Telefonnetz-Endgerät und einem an das Internet angeschlossenen Internet-Endgerät aufzubauen.

Diese Aufgabe wird durch ein Verfahren gemäß der technischen Lehre des Anspruchs 1, sowie eine Dienst-Vermittlungsstelle gemäß der technischen Lehre des Anspruchs 7, einen Dienst-Steuerknoten gemäß der technischen Lehre des Anspruchs 8, ein Internet-Gateway gemäß der technischen Lehre des Anspruchs 9, ein Programm-Modul gemäß der technischen Lehre des Anspruchs 10 sowie ein Internet-Endgerät gemäß der technischen Lehre des Anspruchs 11 gelöst. Weitere vorteilhafte Ausgestaltungen der Erfindung sind den abhängigen Ansprüchen und der Beschreibung zu entnehmen. Kombinationen der Merkmale aus den Ansprüchen untereinander sind ohne Weiteres möglich.

Der Erfindung liegt dabei der Gedanke zugrunde, dass ein Teilnehmer an seinem Telefonnetz-Endgerät lediglich eine Teilnehmernummer eines an das Internet angeschlossenen Internet-Endgeräts seines Kommunikationspartners eingibt. Dann sendet das Telefonnetz-Endgerät eine Rufanforderung an das Telefonnetzwerk, das als ein sogenanntes Intelligentes Netz (IN) ausgebildet ist.

Das Telefonnetzwerk leitet die Rufanforderung an eine sogenannte Dienst-Vermittlungsstelle weiter, die auch SSP (Service Switching Point) bezeichnet wird. Die Dienst-Vermittlungsstelle ermittelt, dass die Rufanforderung als eine Rufanforderung für ein Intelligentes Netz zu behandeln ist und übermittelt eine Dienstanforderungsnachricht an einen Dienst-Steuerknoten, der auch als SCP (Service Control Point) bezeichnet wird. In der Dienstnachricht fordert die Dienst-Vermittlungsstelle bei dem Dienst-Steuerknoten einen Dienst zur Behandlung der in der Rufanforderung angegebenen Teilnehmernummer an. Der Dienst-Steuerknoten ermittelt eine der Teilnehmernummer zugeordnete Internet-Adresse des Internet-Endgeräts und übermittelt eine Dienstnachricht mit der Internet-Adresse des Internet-Endgeräts an die Dienst-Vermittlungsstelle. Daraufhin baut die Dienst-Vermittlungsstelle über das Telefonnetzwerk eine Ruf-Verbindung zu einem Internet-Gateway auf, über das die Ruf-Verbindung zwischen dem Telefonnetz-Endgerät und dem Internet-Endgerät aufgebaut werden kann. Die Dienst-Vermittlungsstelle sendet dem Internet-Gateway die Internet-Adresse des Internet-Endgeräts. Das Internet-Gateway baut den dann noch erforderlichen Verbindungsabschnitt der Ruf-Verbindung zwischen dem Telefonnetz-Endgerät und dem Internet-Endgerät über das Internet mit Hilfe der Internet-Adresse des Internet-Endgeräts auf.

Der anrufende Teilnehmer muss also nur die "virtuelle" Teilnehmernummer des Internet-Endgeräts seines Kommunikationspartners kennen und an dem Telefonnetz-Endgerät eingeben, nicht jedoch dessen "physikalische" Internet-Adresse sowie die Rufnummer des Gateways. Dabei kann die Teilnehmernummer beispielsweise auch eine sogenannte UPT-Nummer (Universal Personal Telecommunications) des Kommunikationspartners sein, unter der der Kommunikationspartner stets erreichbar ist. Wenn der Kommunikationspartner z.B. momentan über einen Teilnehmeranschluss des Telefonnetzwerkes erreichbar ist, wird ein an die UPT-Nummer gerichteter Ruf durch den Dienst-Steuerknoten an diesen Teilnehmeranschluss geleitet. Wenn der Kommunikationspartner jedoch momentan über das Internet-Endgerät erreichbar ist, wird ein an die UPT-Nummer gerichteter Ruf durch den Dienst-Steuerknoten an gemäß der Erfindung an das Internet-Endgerät weitergeleitet.

Die Adresse des Gateways kann zwar in der Dienst-Vermittlungsstelle zum Aufbau der Verbindung zu dem Gateway gespeichert sein, in eine Variante der Erfindung sendet der Dienst-Steuerknoten nicht nur die Internet-Adresse des Internet-Endgeräts, sondern auch die Adresse des Gateways. Diese Adresse kann in Zuordnung zu der Internet-Adresse des Internet-Endgeräts in einer Tabelle in dem Dienst-Steuerknoten abgelegt sein. Es ist jedoch auch möglich, dass der Dienst-Steuerknoten die Adresse des Gateways abhängig von einer Belastung von Verbindungswegen des Telefonnetzwerkes oder abhängig von Gebühren ermittelt, die zum Aufbau des Abschnittes der Ruf-Verbindung zwischen dem Telefonnetz-Endgerät und dem Internet-Gateway auf dem Telefonnetzwerk anfallen. Der Dienst-Steuerknoten kann aus diesen Gründen der Dienst-Vermittlungsstelle auch eine Adresse eines alternativen Gateways mitteilen. Weiter kann der Dienst-Steuerknoten der Dienst-Vermittlungsstelle auch eine Auswahl an Adressen von Gateways übermitteln, so dass die Dienst-Vermittlungsstelle einen optimal für die gewünschte Rufverbindung zwischen dem Telefonnetz-Endgerät und dem Internet-Endgerät geeignetem Gateway auswählen kann.

Da üblicherweise Internet-Adressen, wie eingangs erwähnt, dynamisch vergeben werden, ist es in einer weiteren Variante der Erfindung vorteilhaft, wenn der Gateway oder das Internet-Endgerät dem Dienst-Steuerknoten direkt oder über einen diesem übergeordneten sogenannten Service Management Point (SMP) mitteilt, welche Internet-Adresse dem Internet-Endgerät momentan zugeteilt ist.

Es ist im Rahmen der Erfindung auch ohne Weiteres möglich, dass anstelle des Internets ein Intranet oder eine sonstigen Form eines Online-Datennetzwerkes zum Einsatz kommt, bei dem eine zu dem Telefonnetzwerk abweichende Adressierung eines an das jeweilige Datennetzwerk angeschlossenen Endgerätes nötig ist und ein Gateway zwischen Telefonnetzwerk und Datennetzwerk geschaltet ist.

Im folgenden werden die Erfindung und ihre Vorteile anhand eines Ausführungsbeispiels unter Zuhilfenahme der Zeichnungen dargestellt.
- Figur 1: zeigt eine Anordnung zur Ausführung des erfindungsgemäßen Verfahrens mit einem Telefonnetz-Endgerät TELA, einem Internet-Endgerät TERB, und je einem Ausführungsbeispiel einer erfindungsgemäßen Vermittlungsstelle SSP, eines erfindungsgemäßen Dienst-Steuerknotens SCP und erfindungsgemäßer Gateways GW1 und GW2,
- Figur 2: zeigt ein Ablaufdiagramm des erfindungsgemäßen Verfahrens und
- Figur 3: zeigt ein Ablaufdiagramm eines erfindungsgemäßen Programm-Moduls.

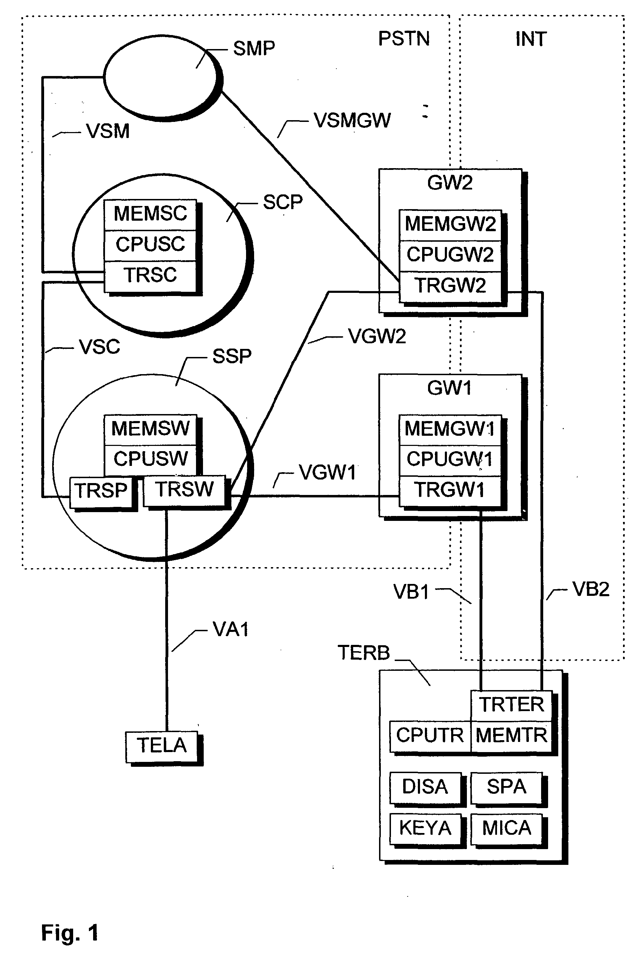

In Figur 1 ist eine beispielhafte Anordnung dargestellt, mit der die Erfindung ausgeführt werden kann. Figur 1 zeigt ein Telekommunikationsnetz PSTN und das Internet INT, jeweils angedeutet durch einen punktierten Kasten. Nicht dargestellte Teilnehmer SUBA und SUBB verfügen über ein Telefonnetz-Endgerät TELA bzw. ein Internet-Endgerät TERB. Bei dem Telefonnetz-Endgerät TELA handelt es sich beispielsweise um ein Festnetz-Telefon, Mobilfunk-Telefon oder um einen für Telefonie ausgerüsteten Personal Computer. Das Telefonnetz-Endgerät TELA kann sowohl für Sprachkommunikation als auch für Bildkommunikation sowie Kombinationen daraus ausgerüstet sein.

Das Internet-Endgerät TERB ist vorzugsweise ein für einen Anschluss an das Internet ausgerüsteter Personal Computer, kann aber beispielsweise auch ein Internet-Kommunikation geeignetes Mobilfunk-Telefon oder Festnetz-Telefon sein. Durch geeignete Software und Hardware ist das Internet-Endgerät TERB für Multimedia-Kommunikation, insbesondere für Sprach- und/oder Bild-Verbindungen ausgerüstet. Das Endgerät TERB weist ein Verbindungsmittel TRTER auf, bei dem es sich beispielsweise um ein Modem oder um einen ISDN-Adapter handelt. Mit dem Verbindungsmittel TRTER kann das Endgerät TERB eine Verbindung zum Internet INT aufbauen, die beispielsweise auch in nicht dargestellter, aber an sich bekannter Weise über das Telekommunikationsnetz PSTN oder über ein anderes, nicht dargestelltes Telefonnetzwerk führen kann. Weiterhin weist das Endgerät TERB ein Steuermittel CPUTR sowie ein Speichermittel MEMTR auf. Das Steuermittel CPUTR ist beispielsweise ein Prozessor mit dem Programm-Code ausgeführt werden kann, der in dem Speichermittel MEMTR gespeichert ist. Bei dem Speichermittel MEMTR handelt es sich z.B. um eine Festplatte oder um RAM-Bausteine. Weiterhin weist das Endgerät TERB ein Anzeigemittel DISA sowie ein Eingabemittel KEYA auf. Das Anzeigemittel DISA ist beispielsweise ein Computer-Monitor oder ein LCD-Display (Liquid Cristal Display). Das Eingabemittel KEYA kann eine Tastatur oder eine Maus sein. Weiterhin weist das Endgerät TERB einen Lautsprecher SPA sowie ein Mikrofon MICA auf, mit denen Sprachaus- bzw. Spracheingabe möglich sind. Beispielsweise mit Hilfe von in dem Speichermittel MEMTR abgelegten und durch das Steuermittel CPUTR ausführbaren Programmcode fungiert das Internet-Endgerät TERB als ein Terminal für Multimedia-Kommunikation, also auch für Sprachkommunikation, z.B. gemäß dem bereits eingangs erwähnten H.323-Standard der ITU (International Telecommunication Union) oder nach einem Standard der IETF.

Von dem Telekommunikationsnetz PSTN sind stellvertretend für weitere, in Figur 1 nicht gezeigte Einrichtungen, z.B. Vermittlungsstellen, Vorfeldeinrichtungen und Verbindungsleitungen, ein Dienst-Vermittlungsstelle SSP, ein Dienst-Steuerknoten SCP sowie ein Dienst-Management-Knoten SMP gezeigt. Die Dienst-Vermittlungsstelle SSP ist ein sogenannter Service Switching Point, der Dienst-Steuerknoten SCP ein sogenannter Service Control Point und der Dienst-Management-Knoten SMP ein sogenannter Service Management Point eines Intelligenten Netzes. Die grundsätzlichen Funktionen eines Service Switching Points, eines Service Control Points sowie eines Service Management Points sind durch die ITU (International Telecommunication Union) standardisiert und müssen deshalb an dieser Stelle nicht weiter ausgeführt werden. Weitere Einrichtungen des als Intelligentes Netz ausgebildeten Telekommunikationsnetzes PSTN, wie z.B. Intelligente Peripherie für Sprachsynthese, Spracherfassung und dergleichen sowie ein sogenanntes Service Creation Environment (SCE), mit dem Dienste für ein Intelligentes Netz erzeugt werden können, sind aus Gründen der Übersichtlichkeit in Figur 1 nicht gezeigt.

Die Vermittlungsstelle SSP und der Dienst-Steuerknoten SCP sind über eine Verbindung VSC, der Dienst-Steuerknoten SCP und der Dienst-Management-Knoten SMP über eine Verbindung VSM miteinander verbunden. Bei den Verbindungen VSC und VSM handelt es sich um Verbindungen, die vorzugsweise über einen Signalisierungskanal oder über ein Signalisierungsnetzwerk geführt werden. Ein solches Signalisierungsnetzwerk ist z.B. das zentrale Zeichengabesystem Nr. 7.

Von der Vermittlungsstelle SSP sind beispielhaft einige wesentliche Komponenten gezeigt, nämlich Verbindungsmittel TRSW und TRSP sowie ein Steuermittel CPUSW und ein Speichermittel MEMSW. Mit dem Verbindungsmittel TRSW kann die Vermittlungsstelle SSP Daten- und Sprachverbindungen zu Teilnehmern oder anderen, nicht gezeigten Vermittlungsstellen aufbauen. Mit dem Verbindungsmittel TRSP kann die Dienst-Vermittlungsstelle SSP Signalisierungsverbindungen, wie z.B. die Verbindung VSC zu dem Dienst-Steuerknoten SCP aufbauen. Bei dem Steuermittel CPUSW handelt es sich um einen Prozessor oder um eine Gruppe von Prozessoren, die Befehle ausführen können, die in dem Speichermittel MEMSW gespeichert sind. Das Steuermittel CPUSW steuert die Funktionen der Vermittlungsstelle SSP und nimmt dabei beispielsweise auf die Funktionen des Verbindungsmittels TRSW Einfluss. Das Verbindungsmittel TRSW, das Steuermittel CPUSW und das Speichermittel MEMSW sind durch in Figur 1 nicht dargestellte Verbindungen untereinander verbunden. Weiterhin kann die Vermittlungsstelle SSP weitere Baugruppen aufweisen, z.B. ein Koppelnetzwerk oder eine Schnittstelle zu einem Network Management System. Die Dienst-Vermittlungsstelle SSP kann eine Ortsvermittlungsstelle sein, an die ausser dem Telefonnetz-Endgerät TELA auch weitere, nicht dargestellte Endgeräte angeschlossen sind. Der Dienst-Vermittlungsstelle SSP können jedoch auch weitere, nicht dargestellte Einrichtungen, z.B. eine Ortsvermittlungsstelle oder eine Vorfeldeinrichtung, vorgelagert sein, an die dann das Telefonnetz-Endgerät TELA angeschlossen ist.

Der Dienst-Steuerknoten SCP weist ein Verbindungsmittel TRSC, sowie ein Steuermittel CPUSC und Speichermittel MEMSC auf. Bei dem Dienst-Steuerknoten SCP kann es sich um einen Server handeln, der durch ein UNIX-Betriebssystem oder ein Windows-NT-Betriebssystem betrieben wird. Das Steuermittel CPUSC ist ein Prozessor oder ein Cluster von Prozessoren, das die Befehle des Betriebssystems, das in dem Speicher MEMSC gespeichert ist, ausführt. Weiterhin können in dem Speichermittel MEMSC, das beispielsweise eine Festplatte oder RAM-Bausteine umfasst, Programmcode-Sequenzen gespeichert sein, die von dem Steuermittel CPUSC ausgeführt werden. Das Steuermittel CPUSC beeinflusst auch die Funktionen des Verbindungsmittels TRSC, mit dem z.B. die erwähnten Verbindungen VSC und VSM aufgebaut werden können. Der Dienst-Steuerknoten SCP weist auch weitere, in Figur 1 nicht dargestellte Baugruppen auf, z.B. einen Monitor, eine Tastatur und eine Maus. Der Dienst-Steuerknoten SCP kann auch weitere Vermittlungsstellen ausser der Vermittlungsstelle SSP bedienen.

Der Dienst-Steuerknoten SCP erbringt für die Dienst-Vermittlungsstelle SSP, sowie auch für weitere, nicht dargestellte aber ähnlich ausgestattete Vermittlungsstellen Dienste. Ein solcher Dienst ist beispielsweise der bekannte Freecall-Dienst (Rufnummern beginnend mit "0800"). Die Vermittlungsstelle SSP und der Dienst-Steuerknoten SCP können zwar den Anforderungen eines Intelligenten Netzes entsprechen, sie können jedoch auch erfindungsgemäß auf eine freie, proprietär definierte Weise auf der Verbindung VSC zusammenwirken. Die Verbindung VSC führt dann beispielsweise über ein Local Area Network (LAN). Ein solches proprietäres Zusammenwirken kann auch definiert werden, wenn die Vermittlungsstelle SSP und der Dienst-Steuerknoten SCP zu einer einzigen Einrichtung zusammengefasst werden. Das Speichermittel MEMSW erfüllt dann zusätzlich die Funktionen des Speichermittels MEMSC, das Steuermittel CPUSW erfüllt die Funktionen des Steuermittels CPUSC und das Verbindungsmittel TRSW die Funktionen des Verbindungsmittels TRSC.

Der Dienst-Management-Knoten SMP steuert die Dienstfunktionen des Dienst-Steuerknoten SCP. Der Dienst-Management-Knoten SMP ist beispielsweise ein Rechner mit Prozessoren und Speichermitteln, Ein- und Ausgabeschnittstellen. Über den Dienst-Management-Knoten SMP können unter anderem für den Dienst-Steuerknoten SCP definierte neue Dienste in den Dienst-Steuerknoten SCP über die Verbindung VSM geladen werden. Der Dienst-Management-Knoten SMP kann ausser dem Dienst-Steuerknoten SCP auch weitere, nicht dargestellte Dienst-Steuerknoten bedienen.

Von dem Internet INT sind lediglich ein Gateway GW1 und ein Gateway GW2 dargestellt. Die weitere Infrastruktur des Internets INT, beispielsweise Server, Router, Gateways und dergleichen sind in Figur 1 aus Gründen der Einfachheit nicht dargestellt. Das Gateway GW1 und das Gateway GW2 sind in dem Ausführungsbeispiel in Figur 1 im Wesentlichen gleich aufgebaut. Daher wird im Folgenden nur das Gateway GW1 genauer erläutert. Das Gateway GW1 weist ein Verbindungsmittel TRGW1, sowie ein Steuermittel CPUGW1 und Speichermittel MEMGW1 auf. Bei dem Gateway GW1 kann es sich um einen Server handeln, der z.B. durch ein UNIX-Betriebssystem betrieben wird. Das Steuermittel CPUGW1 ist ein Prozessor oder ein Cluster von Prozessoren, das die Befehle des Betriebssystems, das in dem Speicher MEMGW1 gespeichert ist, ausführt. Weiterhin können in dem Speichermittel MEMGW1, das beispielsweise eine Festplatte oder RAM-Bausteine umfasst, Programmcode-Sequenzen gespeichert sein, die von dem Steuermittel CPUGW1 ausgeführt werden. Das Steuermittel CPUGW1 beeinflusst auch die Funktionen des Verbindungsmittels TRGW1, mit dem z.B. eine Verbindungen VGW1 zu der Dienst-Vermittlungsstelle SSP und eine Verbindung VB1 zu dem Internet-Endgerät TERB aufgebaut werden können. Das Gateway GW1 weist auch weitere, in Figur 1 nicht dargestellte Baugruppen auf, z.B. einen Monitor, eine Tastatur und eine Maus. Das Gateway GW2 verfügt über ein dem Steuermittel CPUGW1 entsprechendes Steuermittel CPUGW2, ein dem Speichermittel MEMGW1 entsprechende Speichermittel MEMGW2 und über ein dem Verbindungsmittel TRGW1 entsprechendes Verbindungsmittel TRGW2, mit dem das Gateway GW2 eine Verbindung VGW2 zu der Dienst-Vermittlungsstelle SSP, eine Verbindung VB2 zu dem Internet-Endgerät TERB sowie eine Verbindung VSMGW zum dem Dienst-Management-Knoten SMP aufbauen kann.

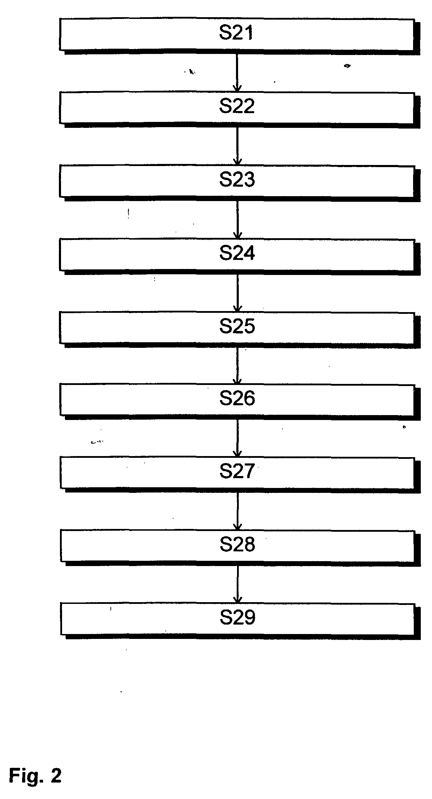

Im Folgenden wird nun anhand von Figur 1 unter Einbeziehung des Ablaufdiagrammes aus Figur 2 das erfindungsgemäße Verfahren dargestellt.

In einem Schritt S21 sendet das Telefonnetz-Endgerät TELA eine Rufanforderung an das Telekommunikationsnetz PSTN, in der eine dem Internet-Endgerät TERB zugeordnete Teilnehmernummer enthalten ist. Diese Teilnehmernummer wird durch den Teilnehmer SUBA an dem Telefonnetz-Endgerät TELA eingegeben.

Bei der Teilnehmernummer handelt es sich um eine übliche Rufnummer, wie sie auch für Verbindungen zu einem an das Telekommunikationsnetz PSTN angeschlossenen Kommunikationspartner verwendet wird. Die Teilnehmernummer kann auch eine dem Teilnehmer SUBB zugeordnete UPT-Rufnummer sein. Das Telekommunikationsnetz PSTN leitet die Rufanforderung in einem Schritt S22 über die Verbindung VA1 an die Dienst-Vermittlungsstelle SSP weiter. Diese ermittelt in einem Schritt S23, dass die Rufanforderung als eine ' Rufanforderung für ein Intelligentes Netz zu behandeln ist. Es kann beispielsweise vorbestimmt sein, dass die Dienst-Vermittlungsstelle SSP jede ankommende Rufanforderung als eine Rufanforderung für ein Intelligentes Netz behandelt. Der in der Rufanforderung angegebenen Teilnehmernummer kann jedoch auch eine Vorwahl vorgeschaltet sein, an der die Dienst-Vermittlungsstelle SSP erkennt, dass die Rufanforderung mit Hilfe eines IN-Dienstes behandelt werden soll. Die Dienst-Vermittlungsstelle SSP übermittelt daher in einem Schritt S24 eine Dienstnachricht über die Verbindung VSC an den Dienst-Steuerknoten SCP, mit der die Dienst-Vermittlungsstelle SSP einen Dienst zur Behandlung der Rufanforderung an die dem Internet-Endgerät TERB zugeordnete Teilnehmernummer anfordert.

Der Dienst-Steuerknoten SCP ermittelt in einem Schritt S25 eine der Teilnehmernummer zugeordnete Internet-Adresse des Internet-Endgeräts TERB. Die Internet-Adresse ist z.B. in einer in dem Speichermittel MEMSC gespeicherten Tabelle oder Datenbank abgelegt, in der erfindungsgemäß auch weitere Kombinationen aus Teilnehmernummer und Internet-Adressen weiterer Teilnehmer abgelegt sein können. In einem Schritt S26 übermittelt der Dienst-Steuerknoten SCP der Dienst-Vermittlungsstelle SSP eine Dienstnachricht mit der Internet-Adresse des Internet-Endgeräts TERB.

In einem Schritt S27 baut daraufhin die Dienst-Vermittlungsstelle SSP die Verbindung VGW1 zu dem Gateway GW1 auf, z.B. mit Hilfe einer in dem Speichermittel MEMSW abgelegten Adresse des Gateways GW1. Die Verbindung VGW1 kann über in Figur 1 nicht dargestellte Einrichtungen und Verbindungswege des Telekommunikationsnetzes PSTN führen. Die Dienst-Vermittlungsstelle SSP sendet dem Gateway GW1 in einem Schritt S28 die Internet-Adresse des Internet-Endgerätes TERB. Dies kann z.B. über eine in Figur 1 nicht dargestellte Signalisierungsverbindung erfolgen, aber auch direkt über die Verbindung VGW1 mit Hilfe einer In-Band-Signalisierung. Mit Hilfe der Internet-Adresse baut das Gateway GW1 dann die Verbindung VB1 zu dem Internet-Endgerät TERB über das Internet auf. Der Aufbau einer paketorientierten Verbindung VB1 mit Hilfe einer Internet-Adresse über das Internet INT ist an sich bekannt und muss daher nicht weiter erläutert werden. Das Telefonnetz-Endgerät TELA und das Internet-Endgerät TERB können dann über die Verbindung VA1-VGW1-VB1 Sprachdaten oder Multimedia-Daten austauschen, z.B. gemäß der H.323-Definitionen. Das Gateway GW1 konvertiert dabei die aus dem Telekommunikationsnetz PSTN empfangenen Daten in das auf dem Internet INT gebräuchliche Format und umgekehrt.

Es ist jedoch auch möglich, dass der Dienst-Steuerknoten SCP in dem Schritt S25 nicht nur die Internet-Adresse des Internet-Endgerätes TERB ermittelt und in dem Schritt S26 an die Dienst-Vermittlungsstelle SSP sendet, sondern auch eine Adresse oder Rufnummer des Gateways GW1. Wie aus Figur 1 ersichtlich, kann die Dienst-Vermittlungsstelle SSP nämlich nicht nur eine Verbindung zu dem Gateway GW1 aufbauen, sondern auch eine Verbindung zu dem Gateway GW2. Die Dienst-Vermittlungsstelle SSP kann dann in dem Schritt S27 je nach von dem Dienst-Steuerknoten SCP empfangener Adresse des Gateways GW1 oder des Gateways GW2 die Verbindung VGW1 oder die Verbindung VGW2 aufbauen.

Die Adresse des Gateways GW1 kann zwar in dem Speichermittel MEMSC in Zuordnung zu der Teilnehmernummer und der Internet-Adresse des Internet-Endgerätes TERB abgelegt sein. Es ist jedoch auch möglich, dass der Dienst-Steuerknoten SCP die Adresse des Gateways GW1 dynamisch ermittelt, beispielsweise in Abhängigkeit der momentanen Belastung von Verbindungswegen für die Verbindungen VGW1 oder VGW2. Wenn die Verbindung VGW1 z.B. über einen temporär besonders belasteten Verbindungsweg oder eine besonders belastete Vermittlungsstelle des Telekommunikationsnetzes PSTN führt, kann der Dienst-Steuerknoten SCP in dem Schritt S26 auch die Adresse des Gateways GW2 mitteilen und so dazu anweisen, die Verbindung VGW2 für das Telefonnetz-Endgerät TELA aufzubauen. Es kann auch hinsichtlich von für den Teilnehmer SUBA anfallender Gebühren günstiger sein, dass die Dienst-Vermittlungsstelle SSP von dem Dienst-Steuerknoten SCP dazu angewiesen wird, anstatt der Verbindung VGW1 die Verbindung VGW2 aufzubauen.

Der Dienst-Steuerknoten SCP kann die Adresse des Gateways GW1 sowie die Internet-Adresse des Internet-Endgerätes TERB als getrennte Werte oder in einem gemeinsamen Zahlenwert an die Dienst-Vermittlungsstelle SSP übermitteln. Damit dabei jeweils nur eine möglichst geringe Datenmenge zu übermitteln ist, entfernt der Dienst-Steuerknoten SCP zunächst die bei Internet-Adresse Trennung von Zahlenblöcken durch Punkte, so dass z.B. aus einem Wert "149.111.111.111" ein Wert "149111111111" wird. Dann wandelt der Dienst-Steuerknoten SCP diesen Zahlenwert aus dezimaler in hexadezimale Darstellung und versendet diesen an die Dienst-Vermittlungsstelle SSP. Die Dienst-Vermittlungsstelle SSP verfährt entsprechend umgekehrt bei der Rückwandlung des so empfangenen hexadezimalen Zahlenwertes.

Ferner kann der Dienst-Steuerknoten SCP der Dienst-Vermittlungsstelle SSP in dem Schritt S26 nicht nur die Adresse des Gateways GW1, sondern auch zusätzlich die Adresse des Gateways GW2 mitteilen, so dass die Dienst-Vermittlungsstelle SSP auswählen kann, ob sie die Verbindung VGW1 oder die Verbindung VGW2 aufbaut. Es kann beispielsweise temporär aus Gründen der Netzlast oder aus aufgrund eines Leitungsausfalls nicht möglich sein, dass die Verbindung VGW1 aufgebaut werden kann. Die Dienst-Vermittlungsstelle SSP kann dann die zu der Verbindung VGW1 alternative Verbindung VGW2 aufbauen.

Die Internet-Adresse des Internet-Endgerätes TERB kann in dem Dienst-Steuerknoten SCP in Zuordnung zu der Teilnehmernummer des Teilnehmers SUBB z.B. durch einen Betreiber des Telekommunikationsnetzes PSTN eingespeichert werden. Aber auch der Teilnehmer SUBA oder der Teilnehmer SUBB kann eine solche Parametrierung ausführen, sehr komfortabel beispielsweise dann, wenn der Dienst-Steuerknoten SCP eine Internet-Schnittstelle zur Parametrierung anbietet, die über einen sogenannten Browser bedient werden kann, der z.B. durch das Internet-Endgerät TERB ausgeführt wird.

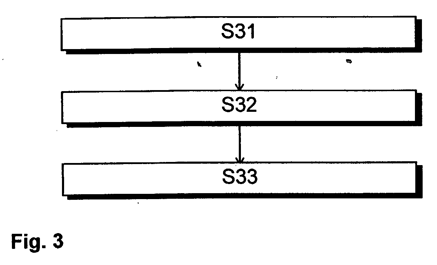

Da jedoch üblicherweise Internet-Endgeräte nicht dauerhaft an das Internet INT angeschlossen sind, haben sie keine dauerhaft zugewiesene, sondern eine pro Internet-Sitzung zugewiesene Internet-Adresse. Das Internet-Endgerät TERB kann dann z.B. mit Hilfe eines im dem Speichermittel MEMTR abgelegten und durch das Steuermittel CPUTR ausgeführten Programm-Moduls, dessen sehr schematisches Ablaufdiagramm in Figur 3 dargestellt ist, dem Dienst-Steuerknoten SCP die jeweils zugewiesene Internet-Adresse mitteilen. Das Programm-Modul ist beispielsweise ein Java-Applet, das von dem Dienst-Management-Knoten SMP über die Verbindung VSMGW und die Verbindung VB2 in das Internet-Endgerät TERB geladen wird.

Bei Beginn einer Internet-Sitzung erfasst das Internet-Endgerät TERB in einem Schritt S31 des Programm-Moduls zunächst die dem Internet-Endgerät TERB temporär zugewiesene Internet-Adresse. Das Programm-Modul kann dazu beispielsweise bei Beginn einer Internet-Sitzung jeweils neu gestartet werden oder als Hintergrundprogramm ablaufen. Der Schritt S31 wird dann als eine Endlosschleife eingerichtet sein, die ständig prüft, ob gerade eine Internet-Sitzung im Gange ist. In einem Schritt S32 des Programm-Moduls ermittelt dann das Internet-Endgerät TERB die Teilnehmernummer des Intemet-Endgörätes TERB. Das Internet-Endgerät TERB sendet dann in einem Schritt S33 des Programm-Moduls eine Nachricht mit der ihm momentan zugewiesenen Internet-Adresse im Zusammenhang mit seiner Teilnehmernummer an den Dienst-Steuerknoten SCP. Das Internet-Endgerät TERB sendet dabei die Nachricht auf der Verbindung VB2 zu dem Gateway GW2, das die Nachricht an den Dienst-Management-Knoten SMP weiterleitet. Der Dienst-Management-Knoten SMP sendet dann eine Mitteilung mit der momentan zugewiesenen Internet-Adresse und der Teilnehmernummer des Internet-Endgeräts TERB über die Verbindung VSM an den Dienst-Steuerknoten SCP. Der Dienst-Management-Knoten SMP kann die Mitteilung auch an weitere, nicht dargestellte erfindungsgemäße Dienst-Steuerknoten des Telekommunikationsnetzes PSTN verteilen. Es ist jedoch auch möglich, dass die Nachricht des Internet-Endgerätes TERB direkt, ohne Umweg über den Dienst-Management-Knoten SMP an den Dienst-Steuerknoten SCP gesendet wird.

In einer weiteren Variante kann das Gateway GW2 prüfen, ob das Internet-Endgerät TERB momentan an das Internet INT angeschlossen ist. Wenn dies der Fall ist, kann das Gateway GW2 die momentan dem Internet-Endgerät TERB zugewiesene Internet-Adresse ermitteln, beispielsweise durch Abfragen bei dem Internet-Endgerät TERB, und dann dem Dienst-Management-Knoten SMP mitteilen.

Es ist jedoch auch möglich, dass der Dienst-Steuerknoten SCP, wie bereits erwähnt, in die Dienst-Vermittlungsstelle SSP, in das Gateway GW1 oder in das Gateway GW2 integriert ist. Dann erfüllen das Steuermittel CPUGW1 bzw. das Steuermittel CPUGW2 die Funktionen des Steuermittels CPUSC, das Speichermittel MEMGW1 bzw. das Speichermittel MEMGW2 die Funktionen des Speichermittels MEMSC sowie das Verbindungsmittel TRGW1 bzw. das Verbindungsmittel TRGW2 die Funktionen des Verbindungsmittels TRSC. Weiter kann auch das Gateway GW1 oder das Gateway GW2 in die Dienst-Vermittlungsstelle SSP integriert sein.

## Patentansprüche

1. Verfahren zum Aufbau einer Ruf-Verbindung zwischen einem an ein als Intelligentes Netzwerk ausgebildetes Telefonnetzwerk (PSTN) angeschlossenen Telefonnetz-Endgerät (TELA) und einem an das Internet (INT) angeschlossenen Internet-Endgerät (TERB), **gekennzeichnet durch** die Schritte:
- das Telefonnetzwerk (PSTN) empfängt von dem Telefonnetz-Endgerät (TELA) eine Rufanforderung an eine dem Internet-Endgerät (TERB) zugeordnete Teilnehmernummer,
- das Telefonnetzwerk (PSTN) leitet die Rufanforderung zu einer Dienst-Vermittlungsstelle (SSP),
- die Dienst-Vermittlungsstelle (SSP) ermittelt, dass die Rufanforderung als eine Rufanforderung für ein Intelligentes Netz zu behandeln ist,
- die Dienst-Vermittlungsstelle (SSP) übermittelt eine Dienstanforderungsnachricht an einen Dienst-Steuerknoten (SCP), mit der die Dienst-Vermittlungsstelle (SSP) einen Dienst zur Behandlung der Rufanforderung an die dem Internet-Endgerät (TERB) zugeordnete Teilnehmernummer anfordert,
- der Dienst-Steuerknoten (SCP) ermittelt eine der Teilnehmernummer zugeordnete Internet-Adresse des Internet-Endgeräts (TERB),
- der Dienst-Steuerknoten (SCP) übermittelt eine Dienstnachricht mit der Internet-Adresse des Internet-Endgeräts (TERB) an die Dienst-Vermittlungsstelle (SSP),
- die Dienst-Vermittlungsstelle (SSP) baut über das Telefonnetzwerk (PSTN) eine Ruf-Verbindung zu einem (ersten) Internet-Gateway (GW1) auf, über das die Ruf-Verbindung zwischen dem Telefonnetz-Endgerät (TELA) und dem Internet-Endgerät (TERB) aufgebaut werden kann,
- die Dienst-Vermittlungsstelle (SSP) sendet dem (ersten) Internet-Gateway (GW1) die Internet-Adresse des Internet-Endgeräts (TERB),
- das Internet-Gateway (GW1) baut den Verbindungsabschnitt (VB1) der Ruf-Verbindung zwischen dem Telefonnetz-Endgerät (TELA) und dem Internet-Endgerät (TERB) über das Internet (INT) mit Hilfe der Internet-Adresse des Internet-Endgeräts (TERB) auf.

2. Verfahren nach Anspruch 1, dadurch gekennzeichnet, dass der Dienst-Steuerknoten (SCP) neben der Internet-Adresse des Internet-Endgeräts (TERB) auch die Adresse des (ersten) Internet-Gateways (GW1) ermittelt, dass der Dienst-Steuerknoten (SCP) die Adresse des (ersten) Internet-Gateways (GW1) der Dienst-Vermittlungsstelle (SSP) zum Aufbau der Ruf-Verbindung zu dem Internet-Gateway (GW1) übermittelt.

3. Verfahren nach Anspruch 1, dadurch gekennzeichnet, dass das (erste) Internet-Gateway (GW1) oder das Internet-Endgerät (TERB) dem Dienst-Steuerknoten (SCP) die Internet-Adresse des Internet-Endgeräts (TERB) zur Abspeicherung im Zusammenhang mit dessen Teilnehmernummer mitteilen.

4. Verfahren nach Anspruch 1, dadurch gekennzeichnet, dass der Dienst-Steuerknoten (SCP) die Internet-Adresse des Internet-Endgeräts (TERB) aus einer Tabelle ermittelt, in der die Adresse des Internet-Endgeräts (TERB) einer Universal-Personal-Telecommunications-Dienst Nummer zugeordnet ist.

5. Verfahren nach Anspruch 2, dadurch gekennzeichnet, dass der Dienst-Steuerknoten (SCP) die Adresse des (ersten) Internet-Gateways (GW1) abhängig von einer Belastung von Verbindungswegen des Telefonnetzwerkes (PSTN) oder abhängig von Gebühren ermittelt, die zum Aufbau des Abschnittes (VA1, VGW1) der Ruf-Verbindung (VA1, VGW1, VB1) zwischen dem Telefonnetz-Endgerät (TELA) und dem Internet-Gateway (GW1) auf dem Telefonnetzwerk (PSTN) anfallen.

6. Verfähren nach Anspruch 2, dadurch gekennzeichnet, dass der Dienst-Steuerknoten (SCP) zumindest eine Adresse eines zweiten Internet-Gateways (GW2) ermittelt und der Dienst-Vermittlungsstelle (SSP) die Adressen des ersten Internet-Gateways (GW1) und die zumindest eine Adresse des zweiten Internet-Gateways (GW2) übermittelt.

7. Dienst-Vermittlungsstelle (SSP) zum Aufbau einer Ruf-Verbindung zwischen einem an ein als Intelligentes Netzwerk ausgebildetes Telefonnetzwerk (PSTN) angeschlossenen Telefonnetz-Endgerät (TELA) und einem an das Internet (INT) angeschlossenen Internet-Endgerät (TERB), wobei die Dienst-Vermittlungsstelle (SSP) Empfangsmittel (TRSW) aufweist, die derart ausgestaltet sind, dass die Dienst-Vermittlungsstelle (SSP) von dem Telefonnetz-Endgerät (TELA) eine Rufanforderung an eine dem Internet-Endgerät (TERB) zugeordnete Teilnehmernummer empfangen kann, **dadurch gekennzeichnet, dass** die Dienst-Vermittlungsstelle (SSP) Erkennungsmittel (CPUSW) aufweist, die derart ausgestaltet sind, dass die Dienst-Vermittlungsstelle (SSP) erkennen kann, dass die Rufanforderung als eine Rufanforderung für ein Intelligentes Netz zu behandeln ist, dass die Dienst-Vermittlungsstelle (SSP) Sendemittel (TRSP) aufweist, die derart ausgestaltet sind, dass die Dienst-Vermittlungsstelle (SSP) eine Dienstanforderungsnachricht zur Anforderung eines Dienstes für die Behandlung der Rufanforderung an die dem Internet-Endgerät (TERB) zugeordnete Teilnehmernummer an einen Dienst-Steuerknoten (SCP) senden kann, dass die Dienst-Vermittlungsstelle (SSP) zweite Empfangsmittel (TRSP) aufweist, die derart ausgestaltet sind, dass die Dienst-Vermittlungsstelle (SSP) eine Dienstnachricht mit der Internet-Adresse des Internet-Endgeräts (TERB) von dem Dienst-Steuerknoten (SCP) empfangen kann, dass die Dienst-Vermittlungsstelle (SSP) Rufaufbaumittel (TRSW) aufweist, die derart ausgestaltet sind, dass die Dienst-Vermittlungsstelle (SSP) über das Telefonnetzwerk (PSTN) eine Ruf-Verbindung zu einem (ersten) Internet-Gateway (GW1) aufbauen kann, über das die Ruf-Verbindung zwischen dem Telefonnetz-Endgerät (TELA) und dem Internet-Endgerät (TERB) aufgebaut werden kann, und dass die Dienst-Vermittlungsstelle (SSP) zweite Sendemittel (TRSW) aufweist, die derart ausgestaltet sind, dass die Dienst-Vermittlungsstelle (SSP) dem Internet-Gateway (GW1) die Internet-Adresse des Internet-Endgeräts (TERB) senden kann.

8. Dienst-Steuerknoten (SCP) zum Aufbau einer Ruf-Verbindung zwischen einem an ein als Intelligentes Netzwerk ausgebildetes Telefonnetzwerk (PSTN) angeschlossenen Telefonnetz-Endgerät (TELA) und einem an das Internet (INT) angeschlossenen Internet-Endgerät (TERB), **dadurch gekennzeichnet, dass** der Dienst-Steuerknoten (SCP) Empfangsmittel (TRSC) aufweist, die derart ausgestaltet sind, dass der Dienst-Steuerknoten (SCP) eine Dienstanforderungsnachricht von einer Dienst-Vermittlungsstelle (SSP) empfangen kann, mit der die Dienst-Vermittlungsstelle (SSP) einen Dienst zur Behandlung einer Rufanforderung an eine dem Internet-Endgerät (TERB) zugeordnete Teilnehmernummer anfordert, dass der Dienst-Steuerknoten (SCP) Mittel (CPUSC, MEMSC) aufweist, die derart ausgestaltet sind, dass der Dienst-Steuerknoten (SCP) eine der Teilnehmernummer zugeordnete Internet-Adresse des Internet-Endgeräts (TERB) ermitteln kann und dass der Dienst-Steuerknoten (SCP) Sendemittel (TRSC) aufweist, die derart ausgestaltet sind, dass der Dienst-Steuerknoten (SCP) eine Dienstnachricht mit der Internet-Adresse des Internet-Endgeräts (TERB) an die Dienst-Vermittlungsstelle (SSP) senden kann.

9. Internet-Gateway (GW1) zum Aufbau einer Ruf-Verbindung zwischen einem an ein als Intelligentes Netzwerk ausgebildetes Telefonnetzwerk (PSTN) angeschlossenen Telefonnetz-Endgerät (TELA) und einem an das Internet (INT) angeschlossenen Internet-Endgerät (TERB), wobei das Internet-Gateway (GW1) Rufaufbau-Mittel (TRGW) aufweist, die derart ausgestaltet sind, dass das Internet-Gateway (GW1) eine Ruf-Verbindung zwischen dem Telefonnetz-Endgerät (TELA) und dem Internet-Endgerät (TERB) aufbauen kann, **dadurch gekennzeichnet, dass** das Internet-Gateway (GW1) Empfangsmittel (TRGW) aufweist, die derart ausgestaltet sind, dass das Internet-Gateway (GW1) eine von einer Dienst-Vermittlungsstelle (SSP) gesendete Internet-Adresse eines Internet-Endgeräts (TERB) empfangen kann und dass die Rufaufbau-Mittel (TRGW) weiterhin derart ausgestaltet sind, dass das Internet-Gateway (GW1) die Ruf-Verbindung zwischen dem Telefonnetz-Endgerät (TELA) und dem Internet-Endgerät (TERB) anhand der Internet-Adresse des Internet-Endgeräts (TERB) aufbauen kann.

10. Programm-Modul für ein Internet-Endgerät (TERB) zum Aufbau einer Ruf-Verbindung zwischen einem an ein als Intelligentes Netzwerk ausgebildetes Telefonnetzwerk (PSTN) angeschlossenen Telefonnetz-Endgerät (TELA) und dem an das Internet (INT) angeschlossenen Internet-Endgerät (TERB), wobei das Programm-Modul Programmcode aufweist, der durch ein Steuermittel des Internet-Endgerätes (TERB) ausgeführt werden kann, wobei das Programm-Modul Erfassungsmittel aufweist, die derart ausgestaltet sind, dass das Programm-Modul ermitteln kann, dass das Internet-Endgerät (TERB) im Rahmen einer Internet-Sitzung an das Internet (INT) angeschlossen ist und welche Internet-Adresse dem Internet-Endgerät (TERB) dabei zugewiesen ist, **dadurch gekennzeichnet, dass** das Programm-Modul Sendemittel aufweist, die derart ausgestaltet sind, dass das Programm-Modul eine Nachricht mit der Internet-Adresse zusammen mit einer dem Internet-Endgerät (TERB) zugeordneten Teilnehmernummer an einen Dienst-Steuerknoten (SCP) des Telekommunikationsnetzes (PSTN) senden kann, so dass der Dienst-Steuerknoten (SCP) einer Dienst-Vermittlungsstelle (SSP) eine Dienstnachricht mit der Internet-Adresse des Internet-Endgeräts (TERB) senden kann, wenn die Dienst-Vermittlungsstelle (SSP) einen Dienst zur Behandlung einer Rufanforderung eines Telefonnetz-Endgerätes (TELA) an die dem Internet-Endgerät (TERB) zugeordnete Teilnehmernummer anfordert.

11. Internet-Endgerät (TERB) **dadurch gekennzeichnet, dass** es Speichermittel (MEMTR) aufweist, in denen ein Programm-Modul nach Anspruch 10 gespeichert ist und dass da Internet-Endgerät (TERB) Steuermittel (CPUTR) aufweist, die derart ausgestaltet sind, dass das Internet-Endgerät (TERB) Programmcode des Programm-Moduls ausführen kann.
